# EUROPEAN PATENT APPLICATION

(11) **EP 4 418 357 A1**
(43) Date of publication of application: **21.08.2024**
(21) Application number: 23175474.8
(22) Date of filing: 25.05.2023
(51) Int. Cl.: H01M 4/36, H01M 4/505, H01M 4/525

(54) **HIGH-VOLTAGE COMPOSITE POSITIVE ELECTRODE MATERIAL AND MANUFACTURING METHOD THEREOF**

(30) Priority: 14.02.2023 TW 112105075
(71) Applicant: Advanced Lithium Electrochemistry Co., Ltd., Taoyuan City 330 (TW)
(72) Inventor: He, Ding-De, 330 Taoyuan City (TW); Hsieh, Han-Wei, 330 Taoyuan City (TW)
(74) Representative: 2K Patentanwälte Blasberg Kewitz & Reichel

(57) **Abstract**

A high-voltage composite positive electrode material and manufacturing method thereof are disclosed. The high-voltage composite positive electrode material includes lithium nickel manganese oxide (LNMO) powders and lithium vanadium fluorophosphate (LVPF) powders. The LNMO powders have a first average particle diameter. A molar ratio of the LVPF powders to the LNMO powders is equal to or less than 0.5. The LVPF powders have a second average particle diameter. The second average particle diameter is less than one-tenth of the first average particle diameter, and the LVPF powders and the LNMO powders are mixed by a mechanically mixing method, so that the LVPF powders are coated on the surfaces of the LNMO powders to form the high-voltage composite positive electrode material.

## Description

### FIELD OF THE INVENTION

The present disclosure relates to a positive electrode material of a secondary battery, and more particularly to a high-voltage composite positive electrode material and a manufacturing method thereof, which has the high-voltage lithium nickel manganese oxide positive electrode material with an appropriate amount of lithium vanadium fluorophosphate coated on the surface thereof, so as to effectively improve the electrical properties and the cycle life.

### BACKGROUND OF THE INVENTION

In recent years, with the continuous improvement of the cruising range of electric vehicles, the demand for ternary oxide positive electrode material has been continuously improved. However, the raw material of cobalt element used in the ternary oxide positive electrode material is regarded as rare, strategic and precious metals, which is not conducive to mass production. In addition, the lithium nickel manganese oxide positive electrode material is a high-voltage positive electrode material that does not contain cobalt. Due to the high redox potential of the lithium nickel manganese oxide positive electrode material, the power density of the lithium nickel manganese oxide positive electrode material is ranged between the power density of the ternary oxide positive electrode material and the power density of the lithium iron phosphate positive electrode material. Furthermore, since the lithium nickel manganese oxide does not contain the cobalt and has less nickel content, the price of the lithium nickel manganese oxide is lower than that of ternary oxides. Therefore, the lithium nickel manganese oxide is often studied and used in the application projects of next-generation electric vehicles and 3C products.

However, when the conventional lithium nickel manganese oxide positive electrode material is charged and discharged at a high potential, there are several side effects formed on the surface of the positive electrode material due to the HF generated by LiPF₆ and H₂O in the electrolyte (LiPF₆ + H₂O → 2HF + LiF + PF₃O). As a result, the capacity, the rate performance, and the cycle life are affected and declined.

Therefore, there is a need to provide a high-voltage composite positive electrode material and a manufacturing method thereof, which has the high-voltage lithium nickel manganese oxide positive electrode material with a surface modification of lithium vanadium fluorophosphate, so as to effectively improve the electrical properties and the cycle life, and obviate the drawbacks encountered by the prior arts.

### SUMMARY OF THE INVENTION

An object of the present disclosure is to provide a high-voltage composite positive electrode material and a manufacturing method thereof. High voltage lithium nickel manganese oxide (LNMO) powders and lithium vanadium fluorophosphate (LVPF) powders are mixed with specific particle sizes and proportions to form the high-voltage composite positive electrode material with the LVPF powders coated on the surfaces of the LNMO powder. In that, the electrical properties and the cycle life of the high-voltage LNMO positive electrode material are significantly improved. Preferably, the LVPF has good electrical conductivity, high voltage platform, excellent rate performance and cycle life. When the LVPF and the high-voltage LNMO positive electrode material are provided in a specific ratio and mixed in a dry mechanofusion method, the LVPF is coated on the surface of high-voltage LNMO positive electrode material. In this way, the conductively of high-voltage LNMO is significantly improved. In addition, the LVPF further provides the protection for the surface of the high-voltage LNMO positive electrode material, so that the impact of the material surface being damaged by the electrolyte is slowed down.

Another object of the present disclosure is to provide a high-voltage composite positive electrode material and a manufacturing method thereof. The LNMO powders and the LVPF powders are provided in an optimized ratio and mixed in a dry mechanofusion method. Since the average particle diameter of the LVPF powders is less than one-tenth of the average particle diameter of the LNMO powders, it allows coating the LVPF powders on the surfaces of the LNMO powders by mixing at 700 rpm to 3500 rpm for 5 minutes to 10 minutes, so as to form a high-voltage composite positive electrode material. On the other hand, when the surface coating is carried out by the dry mechanical fusion method, the temperature in the reaction chamber is maintained between 25° C. and 45° C, so as to avoid the high temperature in the reaction chamber from affecting the materials and coating substances. The aforementioned method for forming the high-voltage composite positive electrode material has a simple and easy-to-control manufacturing process. Furthermore, the high-voltage composite positive electrode material facilitates to maintain the capacity retention rate at a high charge-discharge rate (C-rate), and the good fast charging performance. Compared with the high-voltage LNMO positive electrode material without the LVPF coated thereon, the high-voltage composite positive electrode material with the LVPF coated thereon further improves the capacity retention rate by about 10% at the C-rate of 1C. In other words, the LVPF with tavorite-type structure is utilized to modify the surface of LNMO positive electrode material with the spinel crystal phase structure, so that the rate performance and the cycle life of the LNMO positive electrode material is improved, and the composite positive electrode material can be widely used in more application projects.

In accordance with an aspect of the present disclosure, a high-voltage composite positive electrode material is provided and includes lithium nickel manganese oxide (LNMO) powders and lithium vanadium fluorophosphate (LVPF) powders. The LNMO powders have a first average particle diameter. The LVPF powders have a second average particle diameter. A molar ratio of the LVPF powders to the LNMO powders is equal to or less than 0.5, the second average particle diameter is less than one-tenth of the first average particle diameter, the LVPF powders and the LNMO powders are mixed by a mechanically mixing method, and the LVPF powders are coated on surfaces of the LNMO powders to form the high-voltage composite positive electrode material.

In an embodiment, the molar ratio of the LVPF powders to the LNMO powders is equal to or less than 0.2.

In an embodiment, the molar ratio of the LVPF powders to the LNMO powders is equal to or less than 0.1.

In an embodiment, the first average particle diameter is ranged from 10 µm to 20 µm.

In an embodiment, the second average particle diameter is ranged from 0.2 µm to 2 µm .

In an embodiment, the LNMO powders have a spinel crystal structure and a chemical formula of LiNiₓMn(₂₋ₓ)O₄, where x ≧ 0.5.

In an embodiment, the LVPF powders have a tavorite-type structure and a chemical formula of LiVPO₄F.

In an embodiment, the mechanically mixing method is a mechanofusion method.

In an embodiment, the mechanically mixing method includes a working temperature ranged from 25 °C to 45 °C.

In an embodiment, the mechanically mixing method includes a rotational speed ranged from 700 rpm to 3500 rpm, and a mixing time ranged from 5 minutes to 10 minutes.

In accordance with another aspect of the present disclosure, a manufacturing method of a high-voltage composite positive electrode material is provided and includes steps of: (a) providing lithium nickel manganese oxide (LNMO) powders and lithium vanadium fluorophosphate (LVPF) powders, respectively, wherein a molar ratio of the LVPF powders to the LNMO powders is equal to or less than 0.5, the LNMO powders have a first average particle diameter, the LVPF powders have a second average particle diameter, wherein the second average particle diameter is less than one-tenth of the first average particle diameter; and (b) mixing the LVPF powders and the LNMO powders by a mechanically mixing method, wherein the LVPF powders are coated on surfaces of the LNMO powders to form the high-voltage composite positive electrode material.

In an embodiment, the molar ratio of the LVPF powders to the LNMO powders is equal to or less than 0.2.

In an embodiment, the molar ratio of the LVPF powders to the LNMO powders is equal to or less than 0.1.

In an embodiment, the first average particle diameter is ranged from 10 µm to 20 µm.

In an embodiment, the second average particle diameter is ranged from 0.2 µm to 2 µm .

In an embodiment, the LNMO powders have a spinel crystal structure and a chemical formula of LiNiₓMn(₂₋ₓ)O₄, where x ≧ 0.5.

In an embodiment, the LVPF powders have a tavorite-type structure and a chemical formula of LiVPO₄F.

In an embodiment, the mechanically mixing method is a mechanofusion method.

In an embodiment, the mechanically mixing method includes a working temperature ranged from 25 °C to 45 °C.

In an embodiment, the mechanically mixing method includes a rotational speed ranged from 700 rpm to 3500 rpm, and a mixing time ranged from 5 minutes to 10 minutes.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a flow chart illustrating a manufacturing method of a high-voltage composite positive electrode material according to an embodiment of the present disclosure;
FIG. 2A is an SEM image illustrating the LNMO powders of the present disclosure;
FIG. 2B is an XRD image illustrating the LNMO powders of the present disclosure;
FIG. 3A is an SEM image illustrating the LVPF powders of the present disclosure;
FIG. 3B is an XRD image illustrating the LVPF powders of the present disclosure;
FIG. 4 is a schematic diagram showing the high-voltage composite positive electrode material produced by the mechanofusion method of the present disclosure;
FIGS. 5A to 5D are SEM images at different magnifications illustrating the high-voltage LNMO positive electrode material of the comparative example;
FIGS. 6A to 6D are SEM images at different magnifications illustrating the high-voltage composite positive electrode material of Example 1 of the present disclosure;
FIGS. 7A to 7D are SEM images at different magnifications illustrating the high-voltage composite positive electrode material of Example 2 of the present disclosure;
FIGS. 8A to 8D are SEM images at different magnifications illustrating the high-voltage composite positive electrode material of Example 3 of the present disclosure;
FIG. 9 is a charging and discharging voltage-capacity curve diagram of the comparative example, Example 1, Example 2 and Example 3 of the present disclosure at the C-rate of 0.1C;
FIG. 10 is a discharging capacity-cycle number curve diagram of the comparative example, Example 1, Example 2 and Example 3 of the present disclosure at 1C cycling of room temperature; and
FIG. 11 is a charging capacity retention rate-cycle number curve diagram of the comparative example, Example 1, Example 2 and Example 3 of the present disclosure at 1C cycling of room temperature.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

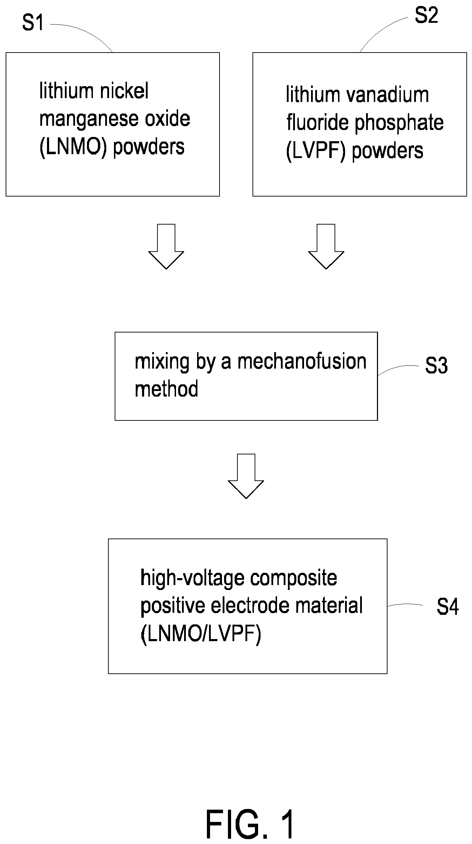

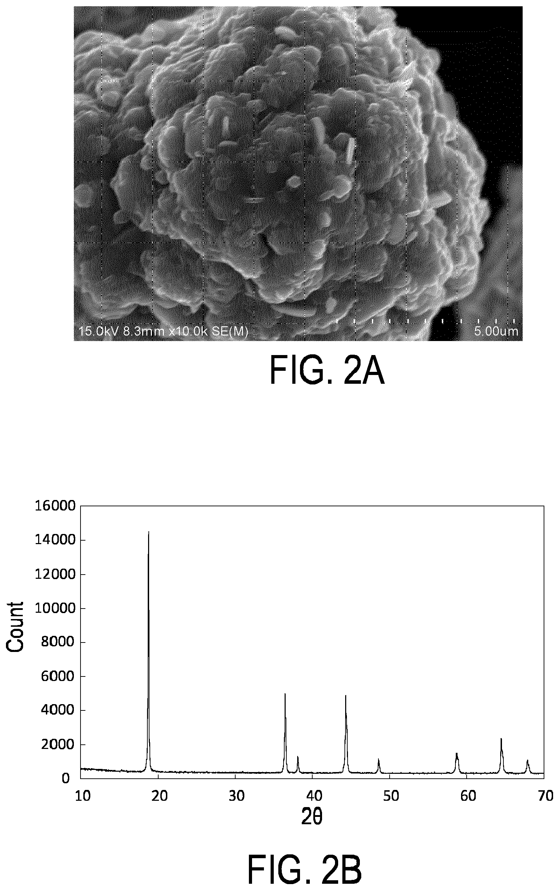

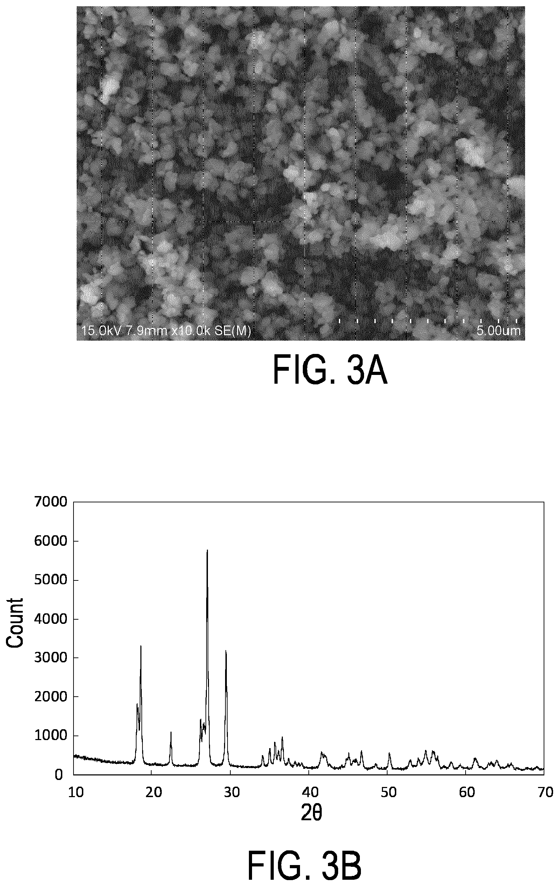

FIG. 1 is a flow chart illustrating a manufacturing method of a high-voltage composite positive electrode material according to an embodiment of the present disclosure. FIG. 2A is an SEM image illustrating the LNMO powders of the present disclosure. FIG. 2B is an XRD image illustrating the LNMO powders of the present disclosure. FIG. 3A is an SEM image illustrating the LVPF powders of the present disclosure. FIG. 3B is an XRD image illustrating the LVPF powders of the present disclosure. In the embodiment, a manufacturing method of a high-voltage composite positive electrode material is provided and includes the following steps. Firstly, lithium nickel manganese oxide (LNMO) powders and lithium vanadium fluorophosphate (LVPF) powders are provided in the step S1 and the step S2, respectively. In the embodiment, the LNMO powders are illustrated in FIG. 2A and FIG. 2B. The LNMO powders have an average particle diameter equal to 15.13 µm with a specific surface area BET=0.31(m²/g), a spinel crystal structure and a chemical formula of LiNiₓMn(₂₋ₓ)O₄, where x=0.5. In addition, the LVPF powders are illustrated in FIG. 3A and FIG. 3B. The LVPF powders have an average particle diameter equal to 0.78 µm with a specific surface area BET=5.39(m²/g), a tavorite-type structure and a chemical formula of LiVPO₄F. Preferably but not exclusively, the LVPF powders are obtained by automatic pulverizer crushing or airflow crushing. The present disclosure is not limited thereto. In the embodiment, a molar ratio of the LVPF powders to the LNMO powders is equal to or less than 0.5. In other embodiments, the LNMO powders have the chemical formula of LiNiₓMn(₂₋ₓ)O₄, where 2>x>0.5. Preferably but not exclusively, the LNMO powders have a first average particle diameter, and the first average particle diameter is ranged from 10 µm to 20 µm. In addition, the LVPF powders have a second average particle diameter, and the second average particle diameter is ranged from 0.2 µm to 2 µm. Notably, except that molar ratio of the LVPF powders to the LNMO powders is not greater than 0.5, the second average particle diameter is less than one-tenth of the first average particle diameter. Thereafter, in the step S3, the LVPF powders and the LNMO powders are mixed by a mechanically mixing method. Finally, the LVPF powders are coated on surfaces of the LNMO powders to form the high-voltage composite positive electrode material (LNMO/LVPF), as shown in the step S4.

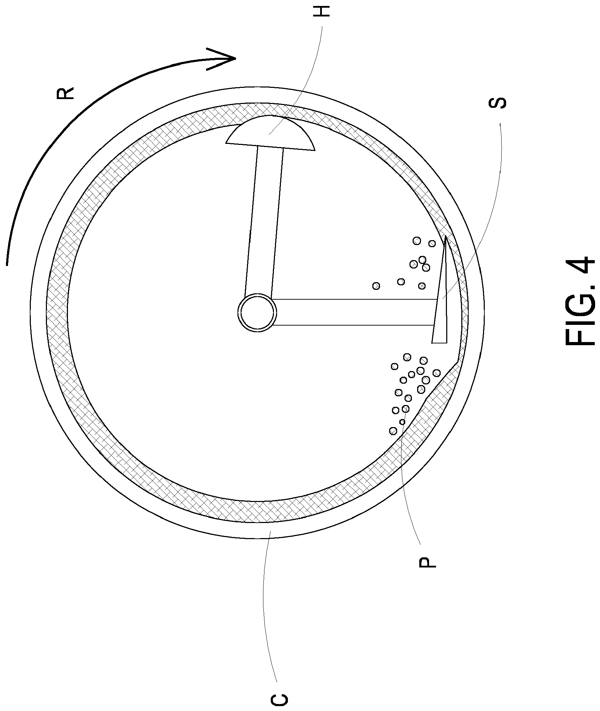

FIG. 4 is a schematic diagram showing the high-voltage composite positive electrode material produced by the mechanofusion method of the present disclosure. In the embodiment, the LVPF powders and the LNMO powders are mixed by the mechanically dry mixing method. Preferably but not exclusively, the mechanically mixing method is a mechanofusion method. When the specific ratio of the LVPF powders and the LNMO powders of the present disclosure is filled into a chamber C of the mechanofusion mixer, the mechanical energy and thermal energy are added simultaneously to mix the LVPF powders and the LNMO powders. In the mechanofusion method, the chamber C is rotated at a rotational speed R, the press-head H applies a high impact energy to the particles, the particles of the LNMO powders can be completely surrounded by the LVPF powders coated thereon, so that the powders P of the high-voltage composite positive electrode material are obtained. The centrifugal force is generated by rotating the chamber C at the rotational speed R to fix the two kinds of particles inside the chamber C. The powders are briefly compacted by means of an internal press-head H fixed on the central shaft. Furthermore, the mixed powders are scraped through a scraper S at high speed. By repeating the compacting/scraping (shearing, shearing) operations and the mechanofusion operations to heat-adhere the LVPF powders and the LNMO powders, the particles are mixed to obtain the powders P of the high-voltage composite positive electrode material. In this way, the LVPF powders and the LNMO powders of the present disclosure are mechanically mixed, so that the LVPF powders are evenly coated on the surfaces of the LNMO powders, and a high-voltage composite positive electrode material is formed.

Notably, in the embodiment, the rotational speed R for the mechanofusion method is ranged from 700 rpm to 3500 rpm. Preferably but not exclusively, in an embodiment, the rotational speed R for the mechanofusion method is set at 700 rpm (the power output is set to 10% of the total output power of the motor), and the mixing time is set to 5 minutes to obtain the high-voltage composite positive electrode material with the LVPF powders uniformly coated on the surfaces of the LNMO powders. Preferably but not exclusively, in an embodiment, the rotational speed R for the mechanofusion method is set at 1400 rpm (the power output is set to 20% of the total output power of the motor), and the mixing time is set to 5 minutes to obtain the high-voltage composite positive electrode material with the LVPF powders uniformly coated on the surfaces of the LNMO powders. Preferably but not exclusively, in an embodiment, the rotational speed R for the mechanofusion method is set at 2100 rpm (the power output is set to 30% of the total output power of the motor), and the mixing time is set to 5 minutes to obtain the high-voltage composite positive electrode material with the LVPF powders uniformly coated on the surfaces of the LNMO powders. Preferably but not exclusively, in an embodiment, the rotational speed R for the mechanofusion method is set at 2800 rpm (the power output is set to 40% of the total output power of the motor), and the mixing time is set to 10 minutes to obtain the high-voltage composite positive electrode material with the LVPF powders uniformly coated on the surfaces of the LNMO powders. Preferably but not exclusively, in an embodiment, the rotational speed R for the mechanofusion method is set at 3500 rpm (the power output is set to 50% of the total output power of the motor), and the mixing time is set to 10 minutes to obtain the high-voltage composite positive electrode material with the LVPF powders uniformly coated on the surfaces of the LNMO powders. Certainly, the rotational speed R and the mixing time for the mechanofusion method are adjustable according to the practical requirements.

On the other hand, when mechanical force is used to coat the LVPF powders on the surfaces of the LNMO powders, high temperature is generated inside the chamber C. In order to avoid the influence of high temperature on the LVPF powders, the LNMO powders and the powders P of high-voltage composite positive electrode material, the working temperature of the chamber C during mechanical mixing is maintained and ranged from 25°C to 45°C. In that, the aforementioned method for forming the high-voltage composite positive electrode material has a simple and easy-to-control manufacturing process. Furthermore, the high-voltage composite positive electrode material facilitates to maintain the capacity retention rate at a high charge-discharge rate (C-rate), and the good fast charging performance.

The manufacturing process and the effects of the high-voltage composite positive electrode material in the present disclosure are further described in detail below through a comparative examples and demonstration examples.

### Comparative example:

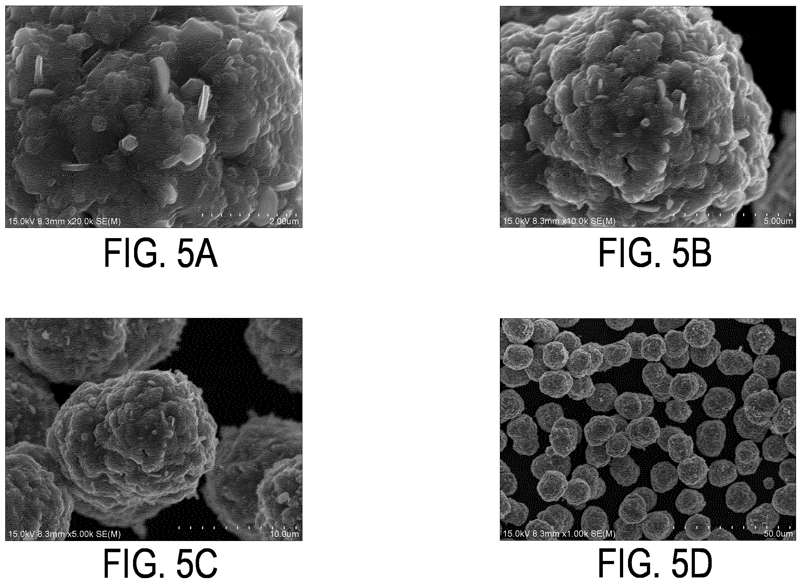

The comparative example is a lithium nickel manganese oxide positive electrode material (LNMO Blank) without a surface modification of LVPF and formed by the LNMO powders merely. FIGS. 5A to 5D are SEM images at different magnifications illustrating the high-voltage LNMO positive electrode material of the comparative example.

### Example 1:

1000 g of the lithium nickel manganese oxide (LiNi_{0.5}Mn_{1.5}O₄, LNMO) powders having the average particle diameter equal to 15.13 µm with the specific surface area BET=0.31(m²/g), and 95g of the lithium vanadium fluorophosphate (LiVPO₄F, LVPF) powders having the average particle diameter equal to 0.78 µm with the specific surface area BET=5.39(m²/g) are provided, respectively, and mixing together by a mechanofusion method. In that, the molar ratio of the LVPF powders to the LNMO powders is equal to 0.1.

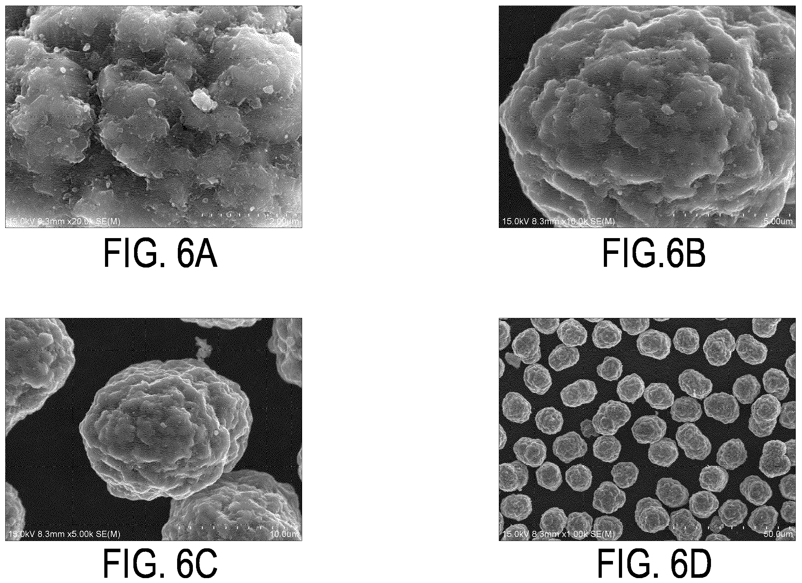

In the embodiment, the LNMO powders and the LVPF powders are mixed by the mechanically mixing method to obtain the high-voltage composite positive electrode material. The mechanically mixing method is the mechanofusion method, which includes the working temperature ranged from 25° C to 45° C, the rotational speed at 700 rpm, and the mixing time of 5 minutes. FIGS. 6A to 6D are SEM images at different magnifications illustrating the high-voltage composite positive electrode material of Example 1 of the present disclosure.

### Example 2:

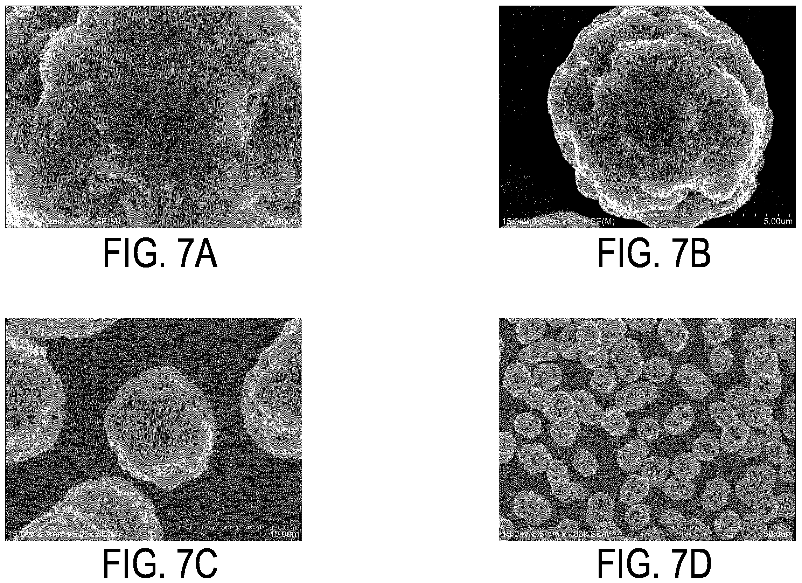

The manufacturing process of Example 2 is roughly the same as that of Example 1, but in the high-voltage composite positive electrode material of Example 2, the molar ratio of the LVPF powders to the LNMO powders is equal to 0.25. That is, the LNMO powders: the LVPF powders =1:0.2375 (in weight percentage). Furthermore, the mechanofusion method for preparing the high-voltage composite positive electrode material of Example 2 includes the working temperature ranged from 25° C to 45° C, the rotational speed at 700 rpm, and the mixing time of 5 minutes. FIGS. 7A to 7D are SEM images at different magnifications illustrating the high-voltage composite positive electrode material of Example 2 of the present disclosure.

### Example 3:

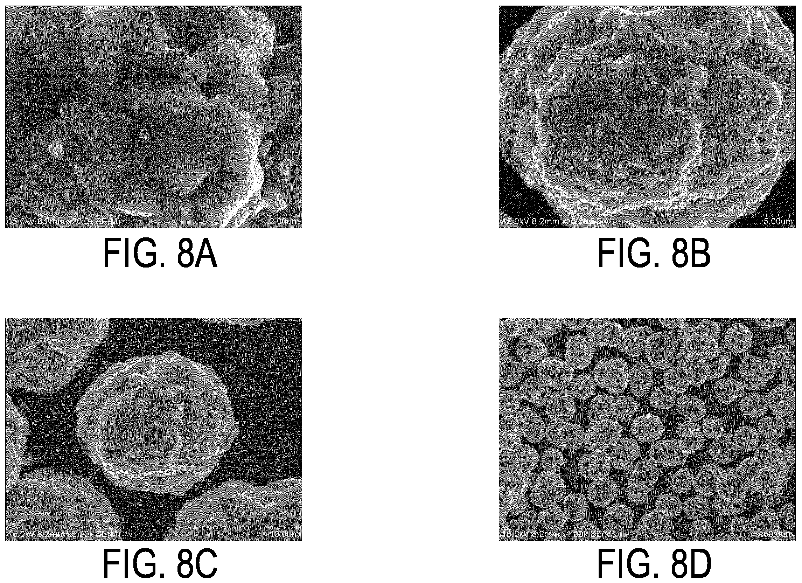

The manufacturing process of Example 3 is roughly the same as that of Example 1, but in the high-voltage composite positive electrode material of Example 3, the molar ratio of the LVPF powders to the LNMO powders is equal to 0.5. That is, the LNMO powders: the LVPF powders =1:0.475 (in weight percentage). Furthermore, the mechanofusion method for preparing the high-voltage composite positive electrode material of Example 2 includes the working temperature ranged from 25° C to 45° C, the rotational speed at 700 rpm, and the mixing time of 5 minutes. FIGS. 8A to 8D are SEM images at different magnifications illustrating the high-voltage composite positive electrode material of Example 3 of the present disclosure.

In order to test the electrical properties of the high-voltage composite positive electrode materials in the aforementioned Example 1 to the Example 3, the high-voltage composite positive electrode material, an auxiliary agent (acetylene carbon black, Li400), a binder of polyvinylidene difluoride (PVDF) and a solvent are mixed, then coated on a substrate and dried to form a positive electrode sheet. Preferably but not exclusively, the high-voltage composite positive electrode material, the auxiliary agent and the PVDF are in a ratio of 94:4:2. The negative electrode sheet is made of lithium metal. The electrolyte disposed between the positive electrode sheet and the negative electrode sheet includes 1.0 M lithium hexafluorophosphate (LiPF₆) and ethylene carbonate (EC)/methyl ethyl carbonate (EMC) (3/7). In this way, the preparation of the test samples of Example 1 to Example 3 are completed. In other embodiments, the electrolyte disposed between the positive electrode sheet and the negative electrode sheet includes 1.150 M lithium hexafluorophosphate (LiPF₆), ethylene carbonate (EC)/diethyl carbonate (DEC)/methyl ethyl carbonate (EMC) (3/3/4) and 5 wt.% fluoroethylene carbonate (FEC). The present disclosure is not limited thereto.

In addition, the comparative example of lithium nickel manganese oxide positive electrode material (LNMO Blank) without the surface modification of LVPF is directly used to form a test sample by the preparation process similar to Example 1.

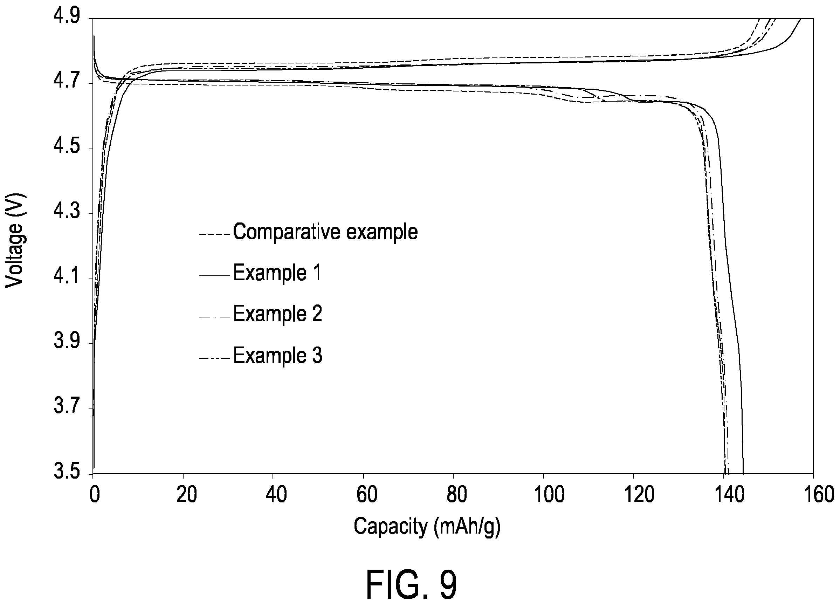

The test samples of the comparative example, Example 1, Example 2 and Example 3 of the present disclosure are tested at a C-rate of 0.1C, 1C, 2C, 3C and 5C. FIG. 9 is a charging and discharging voltage-capacity curve diagram of the comparative example, Example 1, Example 2 and Example 3 of the present disclosure at the C-rate of 0.1C. The testing results of the comparative example, Example 1, Example 2 and Example 3 of the present disclosure at the C-rate of 0.1C are further compared in Table 1 below. As shown in Table 1, Compared with the comparative example, the charging and discharging capabilities of Example 1 to Example 3 are slightly increased, and the Coulomb efficiency (C.E.) is maintained above 90%. Preferably, for the capacity improvement effect of the high-voltage composite positive electrode material, Example 1 with the LNMO powders: the LVPF powders = 1:0.1 (molar ratio) is the best. It can be seen that, by controlling the particle sizes and the relative ratio of the LNMO powders and the LVPF powders in the mechanically mixing method, the LVPF powders are evenly coated on the surfaces of the LNMO powders to form an optimized high-voltage composite positive electrode material, which can significantly improve the electrical properties and the cycle life of the high-voltage lithium nickel manganese oxide (LNMO BLANK) positive electrode material and has good charging and discharging performance.

**Table 1**

| Test sample | 0.1C charging capacity (mAh/g) | 0.1C discharging capacity (mAh/g) | Coulomb efficiency (C.E.) (%) |
|---|---|---|---|
| Comparative example | 150/140 | 146/140 | 93.3 |
| Example 1 | 159/144 | 152/145 | 90.6 |
| Example 2 | 154/141 | 147/141 | 91.6 |
| Example 3 | 155/140 | 147/141 | 90.3 |

In addition, the testing results of the comparative example, Example 1, Example 2 and Example 3 of the present disclosure at the C-rate of 1C/2C/3C/5C are further compared in Table 2 below. Compared with the comparative example, Example 1 presents the significant increase in the capacity at the C-rate of 1C/2C/3C/5C. It can be seen that, by controlling the particle sizes and the relative ratio of the LNMO powders and the LVPF powders in the mechanically mixing method, the LVPF powders are evenly coated on the surfaces of the LNMO powders to form an optimized high-voltage composite positive electrode material, which can significantly improve the electrical properties and the cycle life of the high-voltage lithium nickel manganese oxide (LNMO BLANK) positive electrode material and has good charging and discharging performance. Notably, under the condition of higher charging and discharging rate (C-rate), compared with the comparative example, the capacity of Example 1 is significantly improved and presents the good fast charging performance. Since the LVPF has good electrical conductivity, high voltage platform, excellent rate performance and cycle life, when the LVPF and the high-voltage LNMO positive electrode material are provided in a specific ratio and mixed in a dry mechanofusion method, the LVPF is evenly coated on the surface of high-voltage LNMO positive electrode material. In this way, the conductively of high-voltage LNMO is significantly improved. In addition, the LVPF further provides the protection for the surface of the high-voltage LNMO positive electrode material, so that the impact of the material surface being damaged by the electrolyte is slowed down. In other words, in case of that the molar ratio of the LVPF powders to the LNMO powders is less than or equal to 0.2, the effect of coating the LVPF powders on the LNMO powders is better, and the excessive coating is avoided. In case of that he molar ratio of the LVPF powders to the LNMO powders is less than or equal to 0.1, the formation of the high-voltage composite positive electrode material is further optimized.

**Table 2**

| Test sample | Rate performance at 1C/2C/3C/5C (mAh/g) |
|---|---|
| Comparative example | 133 / 121 / 110 / 89 |
| Example 1 | 138/ 127 / 115 /90 |
| Example 2 | 128/ 110/90/59 |
| Example 3 | 124 / 105 / 84 / 54 |

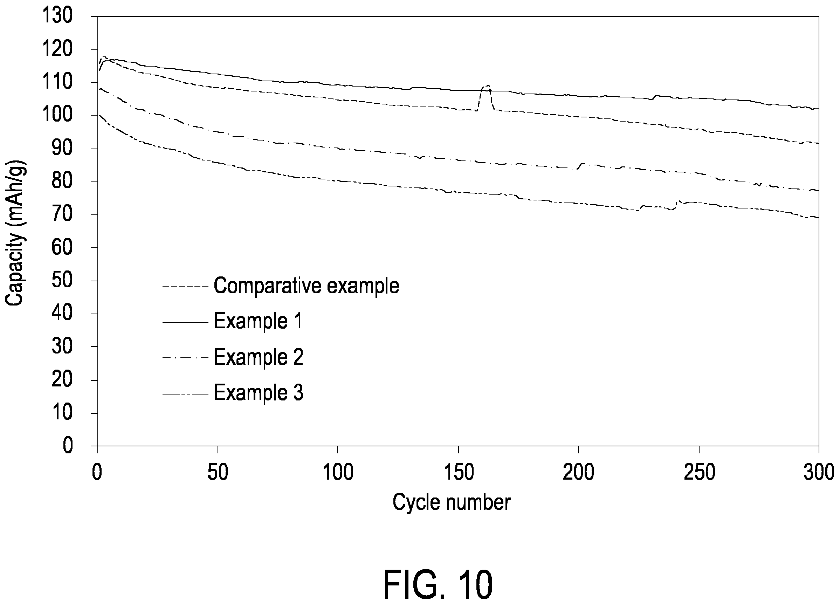

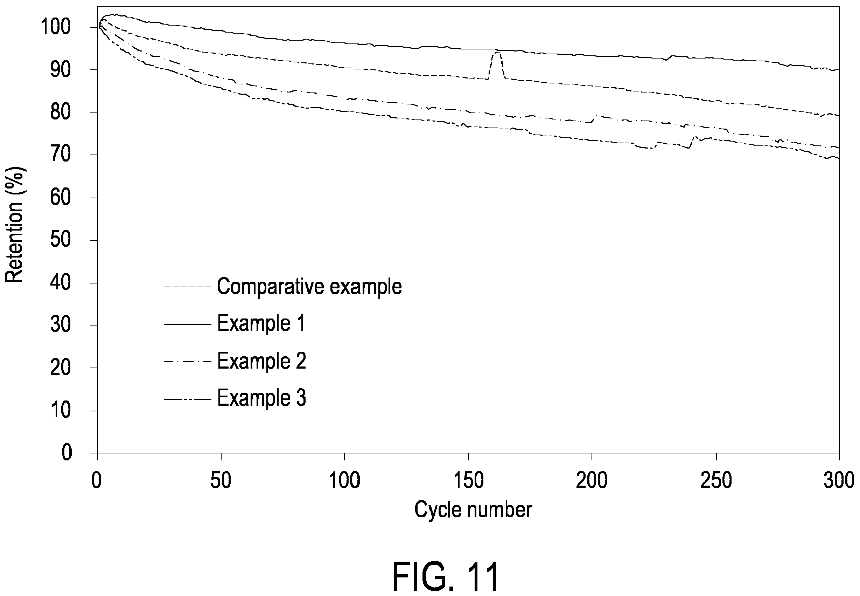

FIG. 10 is a discharging capacity-cycle number curve diagram of the comparative example, Example 1, Example 2 and Example 3 of the present disclosure at 1C cycling of room temperature. FIG. 11 is a charging capacity retention rate-cycle number curve diagram of the comparative example, Example 1, Example 2 and Example 3 of the present disclosure at 1C cycling of room temperature. The comparative example, Example 1, Example 2 and Example 3 are tested for multiple cycles of capacities at 1C charge-discharge rate (C-rate) of room temperature. As shown in the FIG. 10 and FIG. 11, at the charge-discharge rate (C-rate) of 1C, the capacity of Example 1 of the present disclosure is significantly higher than that of the comparative example, and the retention is increased by about 10% after 300 cycles of testing. It can be seen that, by using the LVPF with the tavorite-type structure to modify the surface of the LNMO positive electrode material with the spinel crystal structure, the rate performance and the cycle life of the LNMO positive electrode material is further improved, and the composite positive electrode material can be widely used in more application projects.

Moreover, notably, in the embodiment, the LVPF powders used in the high-voltage composite positive electrode material further includes a small amount of carbon, such as 1.65 wt.% carbon content. Preferably but not exclusively, the carbon is added during the process of automatic pulverizer crushing or airflow crushing. The surfaces of the LVPF powders are covered with a conductive carbon coating layer. In addition to providing good electrical conductivity, when the LVPF powders with the carbon coating layer are coated on the surfaces of the LNMO powders to form the high-voltage composite positive electrode material, the carbon coating layer on the LVPF powder can also provide the protection to slow down the impact of the material surface being damaged by the electrolyte. Certainly, the present disclosure is not limited thereto.

In summary, the present disclosure provides a high-voltage composite positive electrode material and a manufacturing method thereof. High voltage lithium nickel manganese oxide (LNMO) powders and lithium vanadium fluorophosphate (LVPF) powders are mixed with specific particle sizes and proportions to form the high-voltage composite positive electrode material with the LVPF powders coated on the surfaces of the LNMO powder. In that, the electrical properties and the cycle life of the high-voltage LNMO positive electrode material are significantly improved. Preferably, the LVPF has good electrical conductivity, high voltage platform, excellent rate performance and cycle life. When the LVPF and the high-voltage LNMO positive electrode material are provided in a specific ratio and mixed in a dry mechanofusion method, the LVPF is coated on the surface of high-voltage LNMO positive electrode material. In this way, the conductively of high-voltage LNMO is significantly improved. In addition, the LVPF further provides the protection for the surface of the high-voltage LNMO positive electrode material, so that the impact of the material surface being damaged by the electrolyte is slowed down. The LNMO powders and the LVPF powders are provided in an optimized ratio and mixed in a dry mechanofusion method. Since the average particle diameter of the LVPF powders is less than one-tenth of the average particle diameter of the LNMO powders, it allows coating the LVPF powders on the surfaces of the LNMO powders by mixing at 700 rpm to 3500 rpm for 5 minutes to 10 minutes, so as to form a high-voltage composite positive electrode material. On the other hand, when the surface coating is carried out by the dry mechanical fusion method, the temperature in the reaction chamber is maintained between 25° C. and 45° C, so as to avoid the high temperature in the reaction chamber from affecting the materials and coating substances. The aforementioned method for forming the high-voltage composite positive electrode material has a simple and easy-to-control manufacturing process. Furthermore, the high-voltage composite positive electrode material facilitates to maintain the capacity retention rate at a high charge-discharge rate (C-rate), and the good fast charging performance. Compared with the high-voltage LNMO positive electrode material without the LVPF coated thereon, the high-voltage composite positive electrode material with the LVPF coated thereon further improves the capacity retention rate by about 10% at the C-rate of 1C. In other words, the LVPF with tavorite-type structure is utilized to modify the surface of LNMO positive electrode material with the spinel crystal phase structure, so that the rate performance and the cycle life of the LNMO positive electrode material is improved, and the composite positive electrode material can be widely used in more application projects.

## Claims

1. A high-voltage composite positive electrode material, **characterized by** comprising:
lithium nickel manganese oxide (LNMO) powders having a first average particle diameter; and
lithium vanadium fluorophosphate (LVPF) powders having a second average particle diameter, wherein a molar ratio of the LVPF powders to the LNMO powders is equal to or less than 0.5, the second average particle diameter is less than one-tenth of the first average particle diameter, the LVPF powders and the LNMO powders are mixed by a mechanically mixing method, and the LVPF powders are coated on surfaces of the LNMO powders to form the high-voltage composite positive electrode material.

2. The high-voltage composite positive electrode material according to claim 1, wherein the molar ratio of the LVPF powders to the LNMO powders is equal to or less than 0.2.

3. The high-voltage composite positive electrode material according to claim 1, wherein the molar ratio of the LVPF powders to the LNMO powders is equal to or less than 0.1.

4. The high-voltage composite positive electrode material according to claim 1, wherein the first average particle diameter is ranged from 10 µm to 20 µm, and the second average particle diameter is ranged from 0.2 µm to 2 µm.

5. The high-voltage composite positive electrode material according to claim 1, wherein the LNMO powders have a spinel crystal structure and a chemical formula of LiNiₓMn(₂₋ₓ)O₄, where x ≧ 0.5.

6. The high-voltage composite positive electrode material according to claim 1, wherein the LVPF powders have a tavorite-type structure and a chemical formula of LiVPO₄F.

7. The high-voltage composite positive electrode material according to claim 1, wherein the mechanically mixing method is a mechanofusion method, wherein the mechanically mixing method includes a working temperature ranged from 25 °C to 45 °C, a rotational speed ranged from 700 rpm to 3500 rpm, and a mixing time ranged from 5 minutes to 10 minutes.

8. A manufacturing method of a high-voltage composite positive electrode material, **characterized by** comprising steps of:
(a) providing lithium nickel manganese oxide (LNMO) powders and lithium vanadium fluorophosphate (LVPF) powders, respectively, wherein a molar ratio of the LVPF powders to the LNMO powders is equal to or less than 0.5, the LNMO powders have a first average particle diameter, the LVPF powders have a second average particle diameter, wherein the second average particle diameter is less than one-tenth of the first average particle diameter; and
(b) mixing the LVPF powders and the LNMO powders by a mechanically mixing method, wherein the LVPF powders are coated on surfaces of the LNMO powders to form the high-voltage composite positive electrode material.

9. The manufacturing method of the high-voltage composite positive electrode material according to claim 8, wherein the molar ratio of the LVPF powders to the LNMO powders is equal to or less than 0.2.

10. The manufacturing method of the high-voltage composite positive electrode material according to claim 8, wherein the molar ratio of the LVPF powders to the LNMO powders is equal to or less than 0.1.

11. The manufacturing method of the high-voltage composite positive electrode material according to claim 8, wherein the first average particle diameter is ranged from 10 µm to 20 µm, and the second average particle diameter is ranged from 0.2 µm to 2 µm .

12. The manufacturing method of the high-voltage composite positive electrode material according to claim 8, wherein the LNMO powders have a spinel crystal structure and a chemical formula of LiNiₓMn(₂₋ₓ)O₄, where x ≧ 0.5.

13. The manufacturing method of the high-voltage composite positive electrode material according to claim 8, wherein the LVPF powders have a tavorite-type structure and a chemical formula of LiVPO₄F.

14. The manufacturing method of the high-voltage composite positive electrode material according to claim 8, wherein the mechanically mixing method is a mechanofusion method, wherein the mechanically mixing method includes a working temperature ranged from 25 °C to 45 °C, a rotational speed ranged from 700 rpm to 3500 rpm, and a mixing time ranged from 5 minutes to 10 minutes.
